**Europäisches Patentamt**

**European Patent Office**

**Office européen des brevets**

(19)

(11) Veröffentlichungsnummer: **0 018 478**
**B1**

# EUROPÄISCHE PATENTSCHRIFT

(12)

(45) Veröffentlichungstag der Patentschrift:
04.05.83

(51) Int. Cl.³: **B 01 D 53/04,** G 03 G 21/00

(21) Anmeldenummer: **80101091.9**

(22) Anmeldetag: **04.03.80**

(54) Anlage zur Rückgewinnung von Lösungsmitteln und Verfahren zu ihrem Betrieb.

(30) Priorität: **20.04.79 DE 2916095**

(43) Veröffentlichungstag der Anmeldung:
**12.11.80 Patentblatt 80/23**

(45) Bekanntmachung des Hinweises auf die Patenterteilung:
**04.05.83 Patentblatt 83/18**

(84) Benannte Vertragsstaaten:
**AT BE CH FR GB IT NL**

(56) Entgegenhaltungen:
**AT-B-222 094**
**DE-A-2 214 662**
**DE-A-2 222 400**
**DE-B-1 619 850**
**DE-C-882 541**
**DE-U-7 326 267**

(73) Patentinhaber: **SIEMENS AKTIENGESELLSCHAFT,**
**Berlin und München Wittelsbacherplatz 2,**
**D-8000 München 2 (DE)**

(72) Erfinder: **Mugrauer, Hubert. Ing.grad, Parkstrasse 38,**
**D-8011 Pöring (DE)**

## Lösungsmittelrückgewinnungsanlage

Die Erfindung bezieht sich auf eine Lösungsmittelrückgewinnungsanlage für zur Fixierung von entwickelten Ladungsbildern verwendeten Lösungsmitteldampf bei einem Kopier- oder Druckgerät, mit einem eine Heizung beinhaltenden, ausgangsseitig über ein Ventil verschließbaren Adsorber zur Adsorption eines mit Lösungsmitteldampf angereicherten Gases und einem Kondensator zur Verflüssigung des Lösungsmitteldampfes.

Die Adsorption von Lösungsmitteldämpfen mit Hilfe von Adsorbern ist bekannt (Aktive Kohle und ihre industrielle Verwendung von Dr. Bailleul, Dr. Bratzler, Dr. Herbert, Obering. Vollmer, 4. Auflage, 1962, Ferdinand Enke-Verlag, Stuffgart, Seiten 9, 38, 39, 46 – 49). Unter Adsorption wird dabei die von selbst eintretende Verdichtung eines Mediums (Desorbent) an der Oberfläche eines anderen (Adsorbens) verstanden. Es ist weiterhin bekannt, zur Adsorption insbesondere Aktivkohlen zu verwenden. Diese hat den Vorteil, daß sie Dämpfe aus Gas auch bei geringster Konzentration fast vollständig adsorbieren und sich dabei außerordentlich hoch beladen kann. Die Aktivkohle hat weiterhin den Vorteil, daß sie sehr einfach wieder entladen werden kann. Dazu wird beim Stand der Technik Wasserdampf verwendet, der durch die Aktivkohle geblasen wird und dabei den Lösungsmitteldampf aufnimmt.

Aus der angegebenen Literaturstelle (Seiten 46 – 49) ist auch bekannt, wie ein Verfahren aussehen muß, um einen Lösungsmitteldampf aus einem Gas, z. B. Luft, zu entfernen. Die Luft mit dem darin enthaltenen Lösungsmitteldampf wird z. B. von unten nach oben durch die Aktivkohle geblasen. Dabei werden Lösungsmitteldämpfe von der Aktivkohle adsorbiert, die Luft tritt frei von Lösungsmitteldämpfen aus dem Adsorber aus. Wenn die Aktivkohle mit Lösungsmitteldampf beladen ist, wird im Gegenstrom z. B. von oben nach unten Wasserdampf durch die Aktivkohle geführt. Dadurch wird die Aktivkohle von Lösungsmitteldämpfen befreit und diese wird mit dem Wasserdampfstrom zu einem Kondensator geführt und dort mit Kühlwasser niedergeschlagen. Anschließend wird die Aktivkohle, die durch den Wasserdampf erhitzt worden war, wieder abgekühlt. Technische Großanlagen arbeiten dabei in der Regel mit mindestens zwei Adsorbern. Die den Lösungsmitteldampf enthaltende Luft wird zunächst durch den ersten Adsorber geführt. Nach beendeter Beladung des ersten Adsorbers wird die Luft von dem ersten auf den zweiten Adsorber umgeschaltet. Der beladene erste Adsorber wird daraufhin zur Austreibung der aufgenommenen Lösungsmitteldämpfe mit Hilfe von Wasserdampf von oben nach unten ausgedämpft. Das hier anfallende Gemisch von Wasserdampf und Lösungsmitteldämpfen wird zur Kondensation einem Kondensator zugeführt.

Dort scheidet sich das Lösungsmittel aus dem Wasserdampf aus.

Aus der DE-U-7 326 267 ist eine Vorrichtung zur Rückgewinnung eines Lösungsmittels bei einem Kopiergerät bekannt. Die angegebene Rückgewinnungsanlage besteht aus einem Behälter, in dem ein Adsorptionsmittel angeordnet ist. Die dem Lösungsmitteldampf angereicherte Luft wird durch Ausgangsventile hindurchgeführt. Die mit dem Lösungsmitteldampf angereicherte Luft wird nach Öffnen der zugehörigen Ventile durch das Adsorptionsmittel hindurchgeführt. Nach der Beladung des Adsorbers werden die Ventile geschlossen und der Adsorber mit Hilfe einer Heizung erhitzt. Dadurch löst sich das Lögsungsmittel von dem Adsorptionsmittel, es geht wieder in den dampfförmigen Zustand über und gelangt dabei zu einem Kondensator. Im Kondensator wird der Lösungsmitteldampf wieder verflüssigt.

Es ist weiterhin aus der DE-A-2 222 400 ein Verfahren zur Vermeidung von Emissionen bei der Rückgewinnung von Lösungsmitteln während des Umschaltens von Adsorbern nach der Adsorption bekannt. Die hier beschriebene Anlage ist jedoch bei Kopiergeräten und nichtmechanischen Druckern nicht verwendbar, da sie mit Wasserdampf arbeitet und die Erzeugung von Wasserdampf innerhalb eines Kopier- oder Druckgerätes nur mit großem Aufwand möglich ist. Bei der bekannten Anlage wird das beladene Gas einem ersten Adsorber zugeführt und gleichzeitig ein zweiter Adsorber entladen. Die Entladung des Adsorbers geschieht dadurch, daß dem Adsorber Wasserdampf zugeführt wird, dadurch wird das Adsorptionsmittel im Adsorber erhitzt und das Lösungsmittel löst sich vom Adsorptionsmittel und wird vom Wasserdampf mitgenommen. Der Wasserdampf zusammen mit dem darin enthaltenen Lösungsmitteldampf wird über einen Kondensator geführt und anschließend der Beladeluftleitung zugeführt. Erst nach Entladung des Adsorbers mit Hilfe des Wasserdampfes wird zu dessen Trocknung Luft durch den Adsorber hindurchgeleitet, dem Kondensator zugeführt und anschließend der Beladeluftleitung zugeleitet.

Die der Erfindung zugrunde liegende Aufgabe besteht darin, eine Lösungsmittelrückgewinnungsanlage anzugeben, mit der in der Fixierstation eines Kopier- oder Druckgerätes zur Fixierung von entwickelnden Ladungsbildern verwendeter Lösungsmitteldampf rückgewonnen werden kann. Da das Kopier- bzw. Druckgerät, in dem die Lösungsmittelrückgewinnungsanlage eingebaut wird, möglichst klein sein muß, muß auch die Lösungsmittelrückgewinnungsanlage klein ausgeführt sein.

Diese Aufgabe besteht bei einer Lösungsmittelrückgewinnungsanlage der eingangs genannten Art darin, daß zwei Adsorber mit jeweils einer Heizung und einer Kühleinrichtung vorgesehen sind, daß ein Mehrwege-Ventil vorgesehen ist, das mit einer ein Gebläse enthaltenden Eingangsleitung, mit einer den Kondensator und ein erstes Ventil enthaltenden ersten Leitung, mit einer an den ersten Adsorber angeschlossenen zweiten Leitung und mit einer an den zweiten Adsorber angeschlossenen dritten Leitung verbunden ist, daß die erste Leitung somit der Eingangsleitung verbunden ist, daß das Gebläse zwischen dem Mehrwege-Ventil und dem Verbindungspunkt zwischen Eingangsleitung und erste Leitung angeordnet ist, daß am Ausgang des ersten Adsorbers ein zweites Ventil und am Ausgang des zweiten Adsorbers ein drittes Ventil angeordnet ist, das eine Kühlvorrichtung mit einem Kühlsolebehälter vorgesehen ist, und daß die Kühlvorrichtung direkt mit dem Kondensator verbunden ist, während der Kühlsolebehälter mit in Adsorbern angeordneten Kühleinrichtungen verbunden ist.

Ein vorteilhaftes Verfahren zum Betrieb einer derartigen Lösungsmittelrückgewinnungsanlage ist im Patentanspruch 2 gekennzeichnet.

Bei der erfindungsgemäßen Lösungsmittelrückgewinnungsanlage wird zur Entladung der Adsorber mit Hilfe einer Heizung erhitzt und dabei Luft durch den Adsorber hindurchgesaugt. Die Luft nimmt das desorbierte Lösungsmittel mit und führt es über den Kondensator. Die Lösungsmittelrückgewinnungsanlage ist dabei so aufgebaut, daß sie möglichst wenig Platz in Anspruch nimmt. Neben den Adsorbern sind aus diesem Grunde nur wenige Ventile und Leitungen erforderlich, um einerseits die mit Luft beladenen Lösungsmitteldampf dem einen Adsorber zuzuführen und andererseits den anderen Adsorber durch Erhitzen und Hindurchsaugen eines Luftstromes zu entladen, den Luftstrom dem Kondensator zuzuführen und von dort wieder der Beladeleitung zuzuleiten. Allein durch die Betätigung der Ventile und Betätigung des Mehrwege-Ventils und die geschickten Anordnungen der Leitungen ist es möglich, ohne großen Aufwand eine ständig funktionierende, kompakte Lösungsmittelrückgewinnungsanlage zu schaffen.

Die Lösungsmittelrückgewinnungsanlage ist derart realisiert, daß sie Lösungsmittel-Verbrauchsmengen kleiner 0,5 kg pro Stunde rückgewinnen kann. Sie ist einfach ausgeführt und kann billig hergestellt werden. Zusätzliche Gase zur Entladung der Adsorber sind nicht erforderlich.

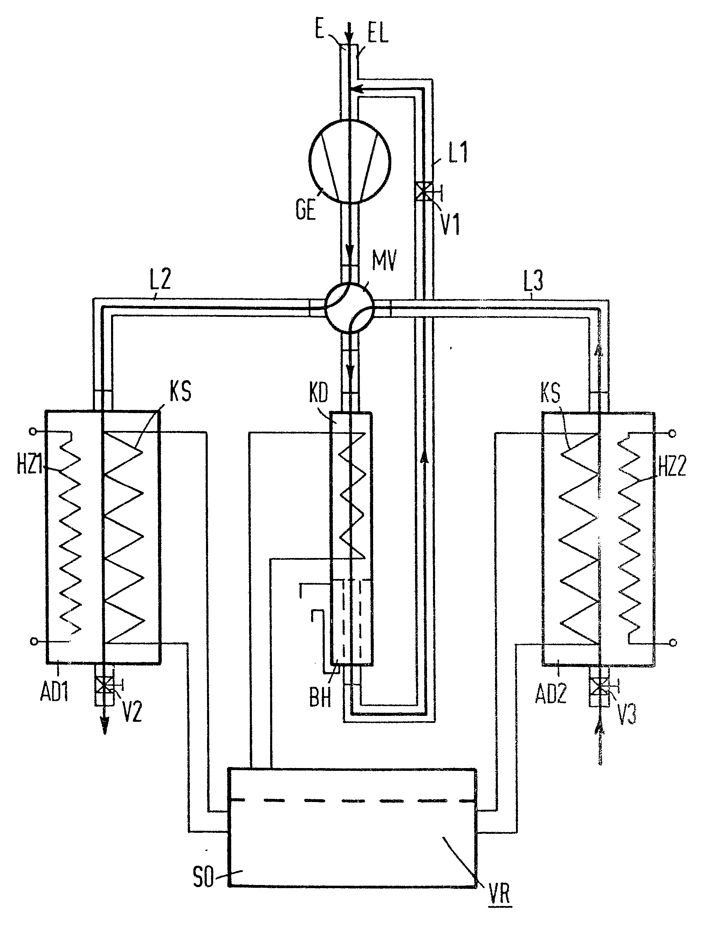

Anhand eines Ausführungsbeispiels, das in der Figur dargestellt ist, wird die Erfindung näher erläutert.

Die Lösungsmittelrückgewinnungsanlage besteht aus einem ersten Adsorber AD1, einem zweiten Adsorber AD2, einem Kondensator KD, einem Gebläse GE, einer Kühlvorrichtung VR und aus die einzelnen Baueinheiten verbindenden Leitungen, in denen Ventile angeordnet sind.

Ein mit Lösungsmitteldampf angereichertes Gas, z. B. Luft, wird einer Eingangsleitung EL am Eingang E angeboten. Es wird mit Hilfe des in der Eingangsleitung EL angeordneten Gebläse GE angesaugt und zu einem Mehrwegeventil MV am Ende der Eingangsleitung EL transportiert. Das Mehrwegeventil MV kann ein Vierwegeventil sein. Das Mehrwegeventil MV kann so eingestellt sein, daß der Luftstrom mit dem Lösungsmitteldampf von der Eingangsleitung EL zu einer Leitung L2 umgeleitet wird, die zu dem ersten Adsorber AD1 führt. Dies ist in der Figur dargestellt. Der Luftstrom läuft somit durch den ersten Adsorber AD1 und belädt die im ersten Adsorber AD1 enthaltene Aktivkohle. Um den Transport des Luftstromes durch den ersten Adsorber AD1 zu ermöglichen, wird ein am Ausgang des Adsorbers AD1 in der Leitung angeordnetes Ventil V2 geöffnet.

Es wird angenommen, daß der zweite Adsorber AD2 mit Lösungsmitteldampf bereits beladen ist. Er wird während der Zeit, in der der erste Adsorber AD1 beladen wird, entladen. Dazu ist das Mehrwegeventil MV so eingestellt, daß eine vom Mehrwegeventil MV zum zweiten Adsorber AD2 führende Leitung L3 mit dem Kondensator KD verbunden wird. Gleichzeitig wird ein am Ausgang des zweiten Adsorbers AD2 in der Leitung liegendes Ventil V3 geöffnet und eine im zweiten Adsorber AD2 angeordnete Heizung HZ2 eingeschaltet. Vom Kondensator KD führt eine weitere Leitung L1 zur Eingangsleitung EL und zwar so, daß das Gebläse GE zwischen der Mündung der Leitung L1 und dem Mehrwegeventil MV liegt.

Wird nun das in der Leitung L1 liegende Ventil V1 ebenfalls geöffnet, dann kann ein Luftstrom, angesaugt durch das Gebläse GE, über das Ventil V3, den zweiten Adsorber AD2, den Kondensator KD, die Leitung L1 und das Ventil V1 zur Leitung EL und von dort über das Gebläse GE, das Mehrwegeventil MV zusammen mit dem übrigen Luftstrom vom Eingang E her zum ersten Adsorber AD1 fließen. Da die Heizung HZ2 im zweiten Adsorber AD2 eingeschaltet ist, lösen sich die Lösungsmitteldämpfe bei einer Temperatur, z. B. ca. 90°, von der Aktivkohle im zweiten Adsorber AD2 und werden von dem Luftstrom mitgenommen. Sie gelangen zusammen mit dem Luftstrom über die Leitung L3 in den Kondensator KD. Der Kondensator KD wird auf bekannte Weise durch die Kühlvorrichtung VR, die auf bekannte Weise aufgebaut sein kann, direkt auf eine Temperatur von z. B. −15°C abgekühlt. Dadurch scheidet sich das Lösungsmittel aus der Luft ab und fließt in einen Behälter BH. Die Luft hinter dem Behälter BH enthält nur noch ganz geringe Mengen an Lösungsmitteldampf. Dieses Gemisch wird über die Leitung L1, das Ventil V1 der Eingangsleitung L zugeführt und läuft zusammen mit dem Luftstrom vom Eingang E her zum ersten Adsorber AD1. Die noch in der Luft hinter dem Kondensator KD enthaltenen Lösungsmitteldämpfe werden dann in dem ersten Adsorber AD1 vollständig adsorbiert.

Ist der zweite Adsorber AD2 entladen, dann wird die Heizung HZ2 ausgeschaltet und die Ventile V2 und V3 geschlossen. Anschließend wird der Adsorber AD2 gekühlt. Dazu sind Kühlschlangen KS im Adsorber AD2 enthalten, die mit der Kühlvorrichtung VR verbunden sind.

Es ist dabei zweckmäßig, in der Kühlvorrichtung VR ein Kühlsolebehälter SO vorzusehen, dessen Inhalt vom Kühlaggregat ständig gekühlt wird. Dann ist es nicht erforderlich, daß das Kühlaggregat selbst so ausgelegt werden muß, daß es neben dem Kondensator KD auch die Kühlschlangen in den Adsorbern AD1 und AD2 direkt kühlen muß. Die Kühlung des zweiten Adsorbers AD2 ist deswegen erforderlich, daß dieser möglichst bald zur Beladung wieder einsetzbereit ist.

Zur Einstellung verschiedener Gasmengenströme in den Leitungen können zweckmäßigerweise die Ventile verwendet werden. Insbesondere die Ventile V2 und V3 können so eingestellt werden, daß der zweite Gasstrom kleiner ist als der erste Gasstrom.

Ist der erste Adsorber AD1 mit Lösungsmitteldampf beladen, dann wird der Luftstrom vom Eingang E der Eingangsleitung EL her vom ersten Adsorber AD1 zum zweiten Adsorber AD2 umgeschaltet. Entsprechend wird das Mehrwegeventil MV eingestellt. Der Luftstrom vom Eingang E her wird somit von der Eingangsleitung EL über die Leitung L3 zum zweiten Adsorber AD2 umgelenkt. Dazu wird das Ventil V3 geöffnet. Gleichzeitig wird dafür gesorgt, daß die Leitung L2, die zum ersten Adsorber AD1 führt, durch das Mehrwegeventil MV zum Kondensator KD umgeschaltet wird. Damit ist der erste Adsorber AD1 über die Leitung L2 mit dem Kondensator KD verbunden. Jetzt wird der erste Adsorber AD1 auf die oben angegebene Art und Weise mit Hilfe des Kondensators KD entladen. Dazu wird das Ventil V1 und V3 geöffnet und ein Luftstrom entgegengesetzt zum Luftstrom bei der Beladung durch den ersten Adsorber AD1 geführt. Gleichzeitig wird eine Heizung HZ1 eingeschaltet. Nach der Entladung des ersten Adsorbers AD1 wird das Ventil V1 und V3 wieder geschlossen und Kühlschlangen KS im Adsorber AD1 mit dem Kühlsolebehälter SO in der Kühlvorrichtung VR verbunden. Der Vorgang läuft dann auf die oben geschilderte Weise weiter.

## Patentansprüche

1. Lösungsmittelrückgewinnungsanlage für zur Fixierung von entwickelten Ladungsbildern verwendeten Lösungsmitteldampf bei einem Kopier- oder Druckgerät, mit einem eine Heizung beinhaltenden, ausgangsseitig über ein Ventil verschließbaren Adsorber zur Adsorption eines mit Lösungsmitteldampf angereicherten Gases und einem Kondensator zur Verflüssigung des Lösungsmitteldampfes, dadurch gekennzeichnet, daß zwei Adsorber (AD1, AD2) mit jeweils einer Heizung (HZ1, HZ2) und einer Kühleinrichtung (KS) vorgesehen sind, daß ein Mehrwegeventil (MV) vorgesehen ist, das mit einer ein Gebläse (GE) enthaltenden Eingangsleitung (EL), mit einer den Kondensator (KD) und ein erstes Ventil (V1) enthaltenden ersten Leitung (L1), mit einer an den ersten Adsorber (AD1) angeschlossenen zweiten Leitung (L2) und mit einer an den zweiten Adsorber (AD2) angeschlossenen dritten Leitung (L3) verbunden ist, daß die erste Leitung (L1) so mit der Eingangsleitung (EL) verbunden ist, daß das Gebläse (GE) zwischen dem Mehrwegeventil (MV) und dem Verbindungspunkt zwischen Eingangsleitung (EL) und erster Leitung (L1) angeordnet ist, daß am Ausgang des ersten Adsorbers (AD1) ein zweites Ventil (V2) und am Ausgang des zweiten Adsorbers (AD2) ein drittes Ventil (V3) angeordnet ist, daß eine Kühlvorrichtung (VR) mit einem Kühlsolebehälter (SO) vorgesehen ist, und daß die Kühlvorrichtung direkt mit dem Kondensator (KD) verbunden ist, während der Kühlsolebehälter mit in den Adsorbern (AD1, AD2) angeordneten Kühleinrichtungen (KS) verbunden ist.

2. Verfahren zum Betrieb der Lösungsmittelrückgewinnungsanlage nach Anspruch 1, dadurch gekennzeichnet, daß das Mehrwegeventil (MV) derart eingestellt wird, daß die Eingangsleitung (EL) mit der zweiten Leitung (L2) und die dritte Leitung (L3) mit dem Kondensator (KD) verbunden wird, daß das zweite Ventil (V2) geöffnet wird, so daß der erste Adsorber (AD1) von mit Lösungsmitteldampf enthaltender Luft über die Eingangsleitung (EL) beladen wird, daß der zweite, bereits beladene Adsorber (AD2) erhitzt wird und das erste und dritte Ventil (V1, V3) geöffnet werden, so daß durch die Saugkraft des Gebläses (GE) Luft über das dritte Ventil (V3), den zweiten Adsorber (AD2), den Kondensator (KD) der Eingangsleitung (EL) zugeführt wird, daß nach Entladung des zweiten Adsorbers (AD2) das erste Ventil (V1) und das dritte Ventil (V3) geschlossen werden und die Kühlung für den zweiten Adsorber (AD2) eingeschaltet wird, daß nach Beladung des ersten Adsorbers (AD1) das Mehrwegeventil (MV) umgeschaltet wird, so daß die Eingangsleitung (EL) mit der dritten Leitung (L3) und die zweite Leitung (L2) mit dem Kondensator (KD) verbunden wird, daß die Heizung (HZ1) für den ersten Adsorber (AD1) eingeschaltet wird und das erste Ventil (V1) und das zweite Ventil (V2) geöffnet werden, bis der erste Adsorber (AD1) entladen ist, und daß dann die Kühlvorrichtung (VR) mit dem Kühlsolebehälter (SO) an den ersten Adsorber (AD1) angeschaltet wird.

## Claims

1. A solvent recovery plant for solvent vapour used for fixing developed charge images in a copying or printing apparatus, comprising an adsorber, which contains a heating means and can be closed at its outlet end by a valve, and for the adsorption of a gas enriched with solvent vapour, and a condenser for liquefying the solvent vapour, characterised in that two adsorbers (AD1, AD2) are each provided with a resprective heating means (HZ1, HZ2) and a respective cooling device (KS); that a multipath valve (MV) is provided which is connected to an input line (EL) containing a blower (GE), to a first line (L1) containing the condenser (KD) and a first valve (V1), to a second line (L2) connected to the first adsorber (AD1), and to a third line (L3) connected to the second adsorber (AD2); that the first line (L1) is so connected to the input line (EL) that the blower (GE) is arranged between the multipath valve (MV) and the connection point between the input line (EL) and the first line (L1); that at the output of the first adsorber (AD1), a second valve (V2) is arranged, and at the output of the second adsorber (AD2) a third valve (V3) is arranged; that a cooling device (VR) is provided, having a cooling liquid container (SO); and that the cooling device is directly connected to the condenser (KD), whilst the cooling liquid container is connected to the cooling devices (KS) arranged in the adsorbers (AD1, AD2).

2. A process for operating the solvent recovery plant according to claim 1, characterised in that the multipath valve (MV) is set in such a way that the input line (EL) is connected to the second line (L2) and the third line (L3) is connected to the condenser (KD); that the second valve (V2) is opened, so that the first adsorber (AD1) is charged with air containing solvent vapour through the input line (EL); that the second adsorber (AD2), which has already been charged, is heated and the first and third valves (V1, V3) are opened, so that through the suction force of the blower (GE), air is fed to the input line (EL) by way of the third valve (V3), the second adsorber (AD2), the condenser (KD); that after discharge of the second adsorber (AD2), the first valve (V1) and the third valve (V3) are closed and the cooling system for the second adsorber (AD2) is switched on; that after the charging of the first adsorber (AD1), the multipath valve (MV) is changed-over, so that the input line (EL) is connected to the third line (L3) and the second line (L2) is connected to the condenser (KD); that the heating means (HZ1) for the first adsorber (AD1) is switched on and the second valve (V2) is opened until the first adsorber (AD1) is discharged; and that the cooling device (VR), together with the cooling liquid container, is then connected to the first adsorber (AD1).

**Revendications**

1. Installation de récupération de solvant, pour de la vapeur de solvant utilisée pour la fixation d'images de charge développées dans un appareil photocopieur ou dans une imprimante, comprenant un adsorbeur, contenant un dispositif de chauffage et pouvant être fermé du côté de la sortie par une soupape, en vue de l'adsorption d'un gaz enrichi en vapeurs de solvant, et condenseur pour la condensation de la vapeur de solvant, caractérisée en ce que deux adsorbeurs (AD1, AD2) ayant chacun un dispositif de chauffage (HZ1, HZ2) et un dispositif de refroidissement (KS) sont prévus, en ce qu'il est prévue une vanne à plusieurs voies (MV), qui communique avec un conduit d'entrée (EL) contenant une soufflante (GE), avec un premier conduit (L1) contenant le condenseur (KD) et une première vanne (V1), avec un deuxième conduit (L2) raccordé au premier adsorbeur (AD1) et avec un troisième conduit (L3) raccordé au second adsorbeur (AD2), en ce que le premier conduit (L1) communique avec le conduit d'entrée (EL) de manière à ce que la soufflante (GE) soit interposée entre la vanne à plusieurs voies (MV) et le point de liaison compris entre le conduit d'entrée (EL) et le premier conduit (L1), en ce que, à la sortie du premier adsorbeur (AD1) est montée une deuxième vanne (V2) et, à la sortie du second adsorbeur (AD2), une troisième vanne (V3), en ce qu'un dispositif de refroidissement (VR), ayant un récipient de saumure de refroidissement (SO) est prévu, et en ce que le dispositif de refroidissement communique directement avec le condenseur (KD), tandis que le récipient de saumure de refroidissement communique avec des dispositifs de refroidissement (KS) disposés dans les adsorbeurs (AD1, AD2).

2. Procédé pour faire fonctionner l'installation de récupération de solvant suivant la revendication 1, caractérisé en ce qu'il consiste à régler la soupape à plusieurs voies (MV) de manière à ce que le conduit d'entrée (EL) communique avec le deuxième conduit (S2) et à ce que le troisième conduit (L3) communique avec le condenseur (KD), à ouvrir la deuxième vanne (V2) de manière à ce que le premier adsorbeur (AD1) soit chargé par de l'air contenant de la vapeur de solvant par l'intermédiaire du conduit d'entrée (EL), à chauffer le second adsorbeur (AD2) déjà chargé, et à ouvrir la première et la troisième vannes (V1, V3) de manière à ce que, par la force d'aspiration de la soufflante (GE), de l'air soit amené par l'intermédiaire de la troisième vanne (V3) du second adsorbeur (AD2) et du condenseur (KD) au conduit d'entrée (EL), à fermer la première vanne (V1) et la troisième vanne (V3) après décharge du second adsorbeur (AD2) et à brancher le refroidissement pour le second adsorbeur (AD2), à commuter la vanne à trois voies (MV) après le chargement du premier adsorbeur (AD1) de manière à ce que le conduit d'entrée (EL) communique avec le troisième conduit (L3) et à ce que le deuxième conduit (L2) communique avec le condenseur (KD), à brancher le dispositif de chauffage (HZ1) pour le premier adsorbeur (AD1) et à ouvrir la première vanne (VI) et la seconde vanne (V2) jusqu'à ce que le premier adsorbeur (AD1) soit déchargé, et ensuite à brancher le dispositif de refroidissement (VR) ayant le récipient pour la saumure de refroidissement (SO) sur le premier adsorbeur (AD1).